# EUROPEAN PATENT APPLICATION

(11) **EP 4 316 944 A1**
(43) Date of publication of application: **07.02.2024**
(21) Application number: 23187183.1
(22) Date of filing: 24.07.2023
(51) Int. Cl.: B61H 5/00, F16D 55/224, F16D 65/00, F16D 65/18

(54) **BRAKE CALIPER DEVICE**

(30) Priority: 26.07.2022 JP 2022119023; 20.07.2023 JP 2023118420
(71) Applicant: NABTESCO CORPORATION, Chiyoda-ku Tokyo 102-0093 (JP)
(72) Inventor: Utsumi, Takashi, Chiyoda-ku, Tokyo (JP)
(74) Representative: Grünecker Patent- und Rechtsanwälte PartG mbB

(57) **Abstract**

Provided is a brake caliper device (20) having redundancy. A brake caliper device (20) includes: a pair of a left arm (40) and a right arm (50), where each arm (40, 50) having a brake pad (12) provided on a tip end thereof; left and right support portions (32A and 32B) rotatably supporting the left and right arms (40 and 50); an electric cylinder (100) configured to drive base ends of the left and right arms (40 and 50) that are opposite to the tip ends with the left and right support portions (32A and 32B) being sandwiched therebetween, in order to rotate the left and right arms (40 and 50) about the left and right rotating portions (35 and 36), so that the brake pads (12) sandwich a disc (11) rotatable together with a wheel of a railway vehicle to brake the railway vehicle; and a pneumatic cylinder (70) configured to drive the left rotating portion 35 of the left arm (40) to reduce the distance between the left and right arms (40 and 50), so that the brake pads (12) sandwich the disc (11) to brake the railway vehicle.

## Description

### TECHNICAL FIELD

The present invention relates to a brake caliper device.

### BACKGROUND

The brake caliper device disclosed in Patent Literature 1 includes an electric brake mechanism and a hydraulic brake mechanism: the former uses an electric motor to drive a brake member; and the latter uses a hydraulic cylinder to drive a brake member. The electric and hydraulic brake mechanisms drive the base ends of the brake arms to cause the brake members to swing around the axis of the brake arms, so that the brake members are pressed against the disc.

### RELEVANT REFERENCES

### LIST OF RELEVANT PATENT LITERATURE

Patent Literature 1: Japanese Patent Application Publication No. 2021-71133

### SUMMARY

In the brake caliper device described in Patent Literature 1, the electric and hydraulic brake mechanisms drive a common drive shaft in order to drive the brake arms. If the drive shaft and the part for transmitting the drive force to the drive shaft are damaged, the brake caliper device can no longer perform braking. To address this issue, there is a demand for redundancy.

To solve the above-described drawbacks, a brake caliper device includes a pair of arms , each arm having a pad provided on a first part thereof; a support portion rotatably supporting the arms; a first drive unit configured to drive a second part of each arm that is opposite to the first part with the support portion being sandwiched between the first and second parts in order to rotate each arm about a corresponding one of a pair of rotating portions, so that the pads sandwich a disc rotatable together with a wheel of a railway vehicle to brake the railway vehicle; and a second drive unit configured to drive a first rotating portion of the pair of rotating portions to reduce a distance between the arms, so that the pads sandwich the disc to brake the railway vehicle.

The above-described brake caliper device includes the first drive unit for driving the second parts of the arms and the second drive unit for driving the first rotating portion of the rotating portions. One of the drive units may become unable to function. According to the present invention, however, redundancy is provided and the other drive unit can serve. Therefore, the brake caliper device relating to the present invention can offer improved reliability.

In the above-described brake caliper device, the first rotating portion may have a rotation lever that is rotatable about an eccentric axis to transmit a driving force from the second drive unit to the first rotating portion, and the second drive unit may be configured to drive the rotation lever to rotate the first rotating portion about the eccentric axis, so that the distance between the arms is reduced.

The above-described brake caliper device may include a first restraining unit configured to restrain the first driving unit from operating; and a second restraining unit configured to restrain the second drive unit from operating. When the first drive unit is in operation, the second restraining unit may operate to restrain the second drive unit from operating. When the second drive unit is in operation, the first restraining unit may operate to restrain the first drive unit from operating.

The above-described brake caliper device may include a control unit configured to control the first and second drive units. When one of the first and second drive units experiences an abnormality, the control unit may drive the other of the first and second drive units.

In the above-described brake caliper device, when driving one of the first and second drive units, the control unit may suspend the other of the first and second drive units.

In the above-described brake caliper device, the control unit may drive one of the first and second drive units until the pads touch the disc and drive the other of the first and second drive units such that the pads press the disc.

In the above-described brake caliper device, the first and second drive units may each have: a speed reducer; and an electric motor configured to drive the arms via the speed reducer. One of the first and second drive units may have a lower reduction ratio than the other of the first and second drive units.

In the above-described brake caliper device, the first drive unit may include an electric motor configured to drive the second parts of the arms, and the second drive unit may have a pneumatic cylinder configured to drive the rotation lever.

### ADVANTAGEOUS EFFECTS

The present invention can provide for redundancy.

### BRIEF DESCRIPTION OF THE DRAWINGS

Fig. 1 is a perspective view showing the configuration of a brake caliper device relating to a first embodiment.
Fig. 2 is a cross-sectional view showing the configuration of the brake caliper device relating to the first embodiment.
Fig. 3 is a cross-sectional view showing the configuration of the brake caliper device relating to the first embodiment.
Fig. 4 is a cross-sectional view showing the configuration of the brake caliper device relating to the first embodiment.
Fig. 5 is a cross-sectional view showing the configuration of a brake caliper device relating to a second embodiment.
Fig. 6 is a cross-sectional view showing the configuration of a brake caliper device relating to a third embodiment.
Fig. 7 is a cross-sectional view showing the configuration of a brake caliper device relating to a fourth embodiment.

### DESCRIPTION OF THE PREFERRED EMBODIMENTS

### <First Embodiment>

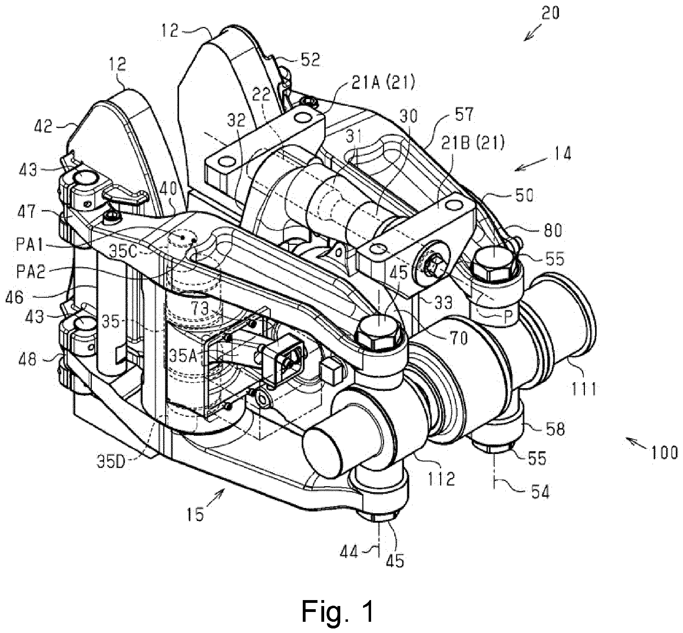

The following describes a brake caliper device relating to a first embodiment with reference to Figs. 1 to 4. The brake caliper device is mounted on railway vehicles and, together with brake discs, functions as a disc brake device.

### <Brake Caliper Device 20>

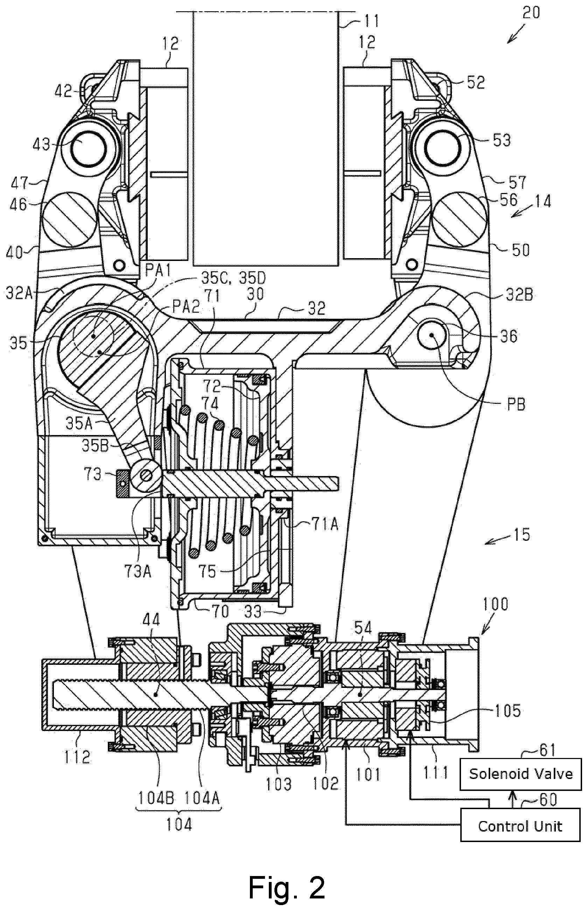

As shown in Figs. 1 and 2, a brake caliper device 20 is mounted to a bogie of a railway vehicle (not shown) and configured to apply a braking force to the railway vehicle having a wheel by pressing brake pads 12 against a disc 11 (see Fig. 2) that rotates integrally with an axle for rotating the wheel. The brake caliper device 20 and the disc 11 together constitute a disc brake device. The brake caliper device 20 includes a brake caliper 14 and a drive device 15. Note that the disc 11 corresponds to a brake disc.

The brake caliper device 20 includes a bracket 21 (see Fig. 1) mounted to the bogie, a body 30 rotatably hung on the bracket 21, and a pair of left and right arms 40 and 50 held by the body 30. The left and right arms 40 and 50 each hold a brake pad 12, so that the brake pads 12 sandwich the disc 11 therebetween to exert a braking force. The body 30 supports the left and right arms 40 and 50 turnably. As the left and right arms 40 and 50 turn, the distance between the brake pads 12 and the disc 11 changes.

The brake caliper device 20 further includes a drive device 15 for driving the left and right arms 40 and 50 so that the left and right arms 40 and 50 turn and the brake pads 12 are pressed against the disc 11. The drive device 15 is driven by compressed air fed thereto and discharged therefrom. The compressed air fed to the drive device 15 is taken from a tank installed on the railway vehicle. The drive device 15 is removably mounted to the body 30.

The bracket 21 includes a first bracket 21A and a second bracket 21B. The body 30 is disposed between the first bracket 21A and the second bracket 21B. A coupling pin 22 penetrates through the first bracket 21A, the body 30, and the second bracket 21B to couple together the first bracket 21A, the body 30, and the second bracket 21B. The body 30 has a base portion 31 through which the coupling pin 22 penetrates. The axis of rotation P extends orthogonally to the axial direction of the axle of the bogie and along the extension direction of the left and right arms 40 and 50, and the base portion 31 rotate about the axis of rotation P.

The body 30 includes a first support portion 32 that extends from the lower portion of the base portion 31 toward the left and right arms 40 and 50 to support the left and right arms 40 and 50. The body 30 includes a second support portion 33 that extends rearward in the longitudinal direction of the left and right arms 40 and 50 from the middle of the first support portion 32 to support the drive device 15. The second support portion 33 is a plate-shaped member. The base portion 31, the first support portion 32, and the second support portion 33 of the body 30 are formed as a single unit body. When the bogie is tilted in the axial direction of the axle, the body 30 turns about the axis of rotation P. This enables the brake pads 12 to always remain parallel to the disc 11.

A left support portion 32A supporting the left arm 40 is provided on the left side of the first support portion 32. A left rotating portion 35 penetrates the left support portion 32A. The left rotating portion 35 is held in the body 30 and is rotatable relative to the left support portion 32A. The left rotating portion 35 supports the left arm 40 rotatably relative to the body 30. A rotation lever 35A is fixedly attached to the left rotating portion 35. The rotation lever 35A can be driven by the driving force produced by the drive device 15.

The upper and lower ends 35C and 35D of the left rotating portion 35 are coaxially located. The central axis of the upper and lower ends 35C and 35D of the left rotating portion 35 coincides with the fulcrum axis PA1 of the left arm 40. The eccentric axis PA2 of the left arm 40 is eccentric with respect to the fulcrum axis PA1 of the left rotating portion 35. When the rotation lever 35A is rotated, the upper and lower ends 35C and 35D of the left rotating portion 35 rotate around the eccentric axis PA2 of the left rotating portion 35 to drive the left arm 40.

A right support portion 32B supporting the right arm 50 is provided on the right side of the first support portion 32. A right rotating portion 36 penetrates the right support portion 32B. The right rotating portion 36 is fixedly attached to the right support portion 32B. The right rotating portion 36 supports the right arm 50 rotatably relative to the body 30. The central axis of the right rotating portion 36 coincides with the fulcrum axis PB of the right arm 50.

As shown in Fig. 1, the left arm 40 includes a pair of an upper left lever 47 and a lower left lever 48. The upper and lower left levers 47 and 48 are spaced away from each other and face each other in the axial direction of the left rotating portion 35. At the tip end portion of the left arm 40, a pad attachment member 42 is connected via two pad rotation pins 43. To the pad attachment member 42, the brake pad 12 is attached. A first portion refers to the tip end portion of the left arm 40, where the brake pad 12 is provided. The pad rotation pins 43 are rotatable relative to the upper and lower left levers 47 and 48. The pad rotation pins 43 are fixedly attached to the pad attachment member 42. The upper and lower left levers 47 and 48 are coupled together via a left lever coupling pin 46. A second part refers to the base end portion of the left arm 40 on the opposite side of the first portion of the left arm 40 with respect to the fulcrum axis PA1.

The right arm 50 includes a pair of an upper right lever 57 and a lower right lever 58. The upper and lower right levers 57 and 58 are spaced away from each other and face each other in the axial direction of the right rotating portion 36. As shown in Fig. 2, at the tip end portion of the right arm 50, a pad attachment member 52 is connected via two pad rotation pins 53. To the pad attachment member 52, the brake pad 12 is attached. A first portion refers to the tip end portion of the right arm 50, where the brake pad 12 is provided. The pad rotation pins 53 are rotatable relative to the upper and lower right levers 57 and 58. The pad rotation pins 53 are fixedly attached to the pad attachment member 52. The upper and lower right levers 57 and 58 are coupled together via a right lever coupling pin 56. A second part refers to the base end portion of the right arm 50 on the opposite side of the first portion of the right arm 50 with respect to the fulcrum axis PB.

### <Drive Device 15>

As shown in Fig 2, the drive device 15 includes a pneumatic cylinder 70 and an electric cylinder 100. While the electric cylinder 100 functions as a service brake, the pneumatic cylinder 70 functions as a security brake.

The pneumatic cylinder 70 drives the left and right arms 40 and 50 such that their tip end portions come closer to each other, i.e. the relative distance between their tip ends decreases. In this way, the disc 11 is sandwiched between the brake pads 12, thereby braking the railway vehicle having a wheel. The pneumatic cylinder 70 serves as a second drive unit.

The electric cylinder 100 drives the base ends of the left and right arms 40 and 50 such that the disc 11 is sandwiched between the brake pads 12. This resultantly brakes the railway vehicle having a wheel. The electric cylinder 100 causes the left arm 40 to rotate around the fulcrum axis PA1 of the left arm 40 and, at the same time, causes the right arm 50 to rotate around the fulcrum axis PB of the right arm 50. The electric cylinder 100 serves as a first drive unit.

### <Pneumatic Cylinder 70>

The pneumatic cylinder 70 is mounted to the left-side surface of the second support portion 33 of the body 30. The surface of the second support portion 33 to which the pneumatic cylinder 70 is mounted is parallel to the extension direction of the left and right arms 40 and 50 and to the surfaces of the brake pads 12. The second support portion 33 of the body 30 has an opening 33A formed at the center thereof. The opening 33A is elongated in the longitudinal direction of the left and right arms 40 and 50. This allows, in mounting and removing the pneumatic cylinder 70, the pneumatic cylinder 70 to move in the opening 33A in the longitudinal direction of the left and right arms 40 and 50.

The pneumatic cylinder 70 includes a first cylinder chamber 71, a first piston 72, a first rod 73, and a first spring 74. The first piston 72 moves within the first cylinder chamber 71. The first rod 73 is fixed to the first piston 72 and projects from the first cylinder chamber 71. The first spring 74 energizes the first piston 72 in such a direction that the first rod 73 will be housed in the first cylinder chamber 71. In the first cylinder chamber 71, the first spring 74 is provided on one of the sides defined with respect to the first piston 72, and a first space 75 is defined on the other side. The pneumatic cylinder 70 includes a first feeding port (not shown) for feeding a compressed air into the first space 75 of the first cylinder chamber 71. The first feeding port 76 is provided outside the first cylinder chamber 71. When the compressed air is fed into the first space 75 within the first cylinder chamber 71, the first piston 72 is pushed such that the first rod 73 projects. When the compressed air is discharged from the first space 75 within the first cylinder chamber 71, the first spring 74 pushes the first piston 72 so that the first rod 73 is accommodated in the first cylinder chamber 71. The first spring 74 serves as a second restraining unit.

A rotatable roller 35B is attached to the tip end of the rotation lever 35A. The first rod 73 has a receiving portion 73A provided in the tip end thereof. The receiving portion 73A is a through-hole for receiving therein the roller 35B while touching the roller 35B. The receiving portion 73A is configured to transmit the driving force from the first rod 73 to the rotation lever 35A, while absorbing the lag between the linear movement of the first rod 73 and the rotational movement of the rotation lever 35A. The pneumatic cylinder 70 rotates the rotation lever 35A to rotate the left rotating portion 35, so that the tip end portion of the left arm 40 moves toward the tip end portion of the right arm 50.

### <Electric Cylinder 100>

As shown in Fig. 1, the electric cylinder 100 couples together the base end portions of the left and right arms 40 and 50. The left arm 40 and electric cylinder 100 are rotatably coupled with each other with a pair of upper and lower bolts 45. The right arm 50 and electric cylinder 100 are rotatably coupled with each other with a pair of upper and lower bolts 55. The left arm 40 and electric cylinder 100 rotate about the axis of rotation 44, and the right arm 50 and electric cylinder 100 rotate about the axis of rotation 54. The axes 44 and 54 serve as the point of effort.

The electric cylinder 100 includes a first casing 111 and a second casing 112. The first and second casings 111 and 112 are separate casings. The first casing 111 is connected between the base end portion of the upper right lever 57 and the base end portion of the lower right lever 58. The first casing 111 is turnably coupled with the right upper and lower levers 57 and 58 via the bolts 55. The second casing 112 connects between the base end portions of the left upper and lower levers 47 and 48. The second casing 112 is turnably coupled with the left upper and lower levers 47 and 48 via the bolts 45.

As shown in Fig. 2, the electric cylinder 100 has an electric motor 101, a speed reducer 103, a ball screw 104, and an electromagnetic brake 105. The electric motor 101, speed reducer 103 and electromagnetic brake are housed in the first casing 111. The driving force produced by the electric motor 101 is transmitted to the ball screw 104 via the speed reducer 103. The electric motor 101 has a drive shaft 102. The drive shaft 102 is coupled to the speed reducer 103. The ball screw 104 has a screw shaft 104A and a nut 104B. The screw shaft 104A is connected to the speed reducer 103. The inner wall of the nut 104B has internal threads that are configured to engage with the external threads of the screw shaft 104A. The nut 104B rotates relative to the screw shaft 104A while engaging with the external threads of the screw shaft 104A. The nut 104B moves in the axial direction of the screw shaft 104A as the screw shaft 104A rotates. The ball screw 104 is a mechanism for converting rotational motion into linear motion. The nut 104B is fixedly attached to the second casing 112. When the electric motor 101 is driven, the screw shaft 104A rotates, so that the nut 104B linearly moves. This causes the second casing 112 to move relative to the first casing 111. The electromagnetic brake 105 is connected to the drive shaft 102 on the opposite side of the speed reducer 103. When current is fed to the electromagnetic brake 105, the electromagnetic brake 105 prevents the drive shaft 102 from rotating. When no current is fed to the electromagnetic brake 105, on the other hand, the electromagnetic brake 105 allows the drive shaft 102 to rotate. The electromagnetic brake 105 serves as a first restraining unit. The brake caliper device 20 functions as a parking brake by putting the electromagnetic brake 105 into operation while the electric cylinder 100 is applying a braking force. The electromagnetic brake 105 includes a manual release mechanism, which is not shown. The electric motor 101 is equivalent to an electric motor.

### <Control Unit 60>

The brake caliper device 20 includes a control unit 60. The control unit 60 controls the pneumatic and electric cylinders 70 and 100. The control unit 60 controls a solenoid valve 61 to control the pneumatic cylinder 70. The solenoid valve 61 allows or stops compressed air to be fed to or from being fed to the pneumatic cylinder 70. The solenoid valve 61 is opened when current is applied thereto and closed when current is stopped. The control unit 60 controls the electric motor 101 to control the electric cylinder 100. The control unit 60 controls the electromagnetic brake 105.

When driving the electric cylinder 100, the control unit 60 restricts the pneumatic cylinder 70 from operating, by causing the compressed air to be discharged from the first space 75 and thus actuating the first spring 74. This means that, when the electric cylinder 100 is driven, the first spring 74 is actuated so that the pneumatic cylinder 70 is prevented from operating. When driving the pneumatic cylinder 70, on the other hand, the control unit 60 operates the electromagnetic brake 105, thereby restricting the electric cylinder 100 from operating. This means that, when the pneumatic cylinder 70 is driven, the electromagnetic brake 105 is actuated so that the electric cylinder 100 is prevented from operating.

When one of the pneumatic and electric cylinders 70 and 100 experiences abnormalities, the control unit 60 puts the other of the pneumatic and electric cylinders 70 and 100 into operation. The railway vehicle may not slow down even while the pneumatic or electric cylinder 70 or 100 is in operation. If this is detected, this may indicate that abnormalities occur in the pneumatic or electric cylinder 70 or 100. Whether abnormalities occur in the electric cylinder 100 can be detected by sensing abnormalities in current flowing through the electric motor 101. In this way, in the event of power failures or the like, the pneumatic cylinder 70 can operate in place of the electric cylinder 100. Thus, the brake caliper device 20 has redundancy and exhibits higher reliability.

When allowing one of the pneumatic and electric cylinders 70 and 100 to operate, the control unit 60 suspends the other of the pneumatic and electric cylinders 70 and 100 from operating. When the pneumatic cylinder 70 is suspended, the first spring 74 is in operation. When the electric cylinder 100 is suspended, the electric motor 101 is not powered. In this way, the electric and pneumatic cylinders 100 and 70 can operate independently without interfering with each other.

The control unit 60 drives the pneumatic cylinder 70 until the brake pads 12 eventually touch the disc 11, and drives the electric cylinder 100 such that the brake pads 12 press the disc 11. In this manner, braking can be fine-tuned by controlling the electric motor 101.

The electric cylinder 100 also serves as a gap adjuster. The gap adjuster is configured to adjust the gaps between the brake pads 12 and the disc 11. Specifically, the gap adjuster adjusts the distance between the base end of the left arm 40 and the base end of the right arm 50 to adjust the gaps between the brake pads 12 and the disc 11. A sensor (not shown) is provided for detecting the amount of movement of the first rod 73. Increased gaps may be provided between the brake pads 12 and the disc 11 if the brake pads 12 wear off. In this case, the gap adjuster increases the distance between the base end of the left arm 40 and the base end of the right arm 50, thereby reducing the distance between the brake pads 12 and the disc 11. The electric cylinder 100 adjusts the gaps between the brake pads 12 and the disc 11 by adjusting the initial position of the ball screw 104. The control unit 60 adjusts the initial position of the ball screw 104 such that the electric motor 101 operates by a predetermined amount when the brake caliper device 20 applies braking.

### <Operation>

The following now describes how the brake caliper device 20 works with reference to Figs. 2 to 4.

### <Service Braking>

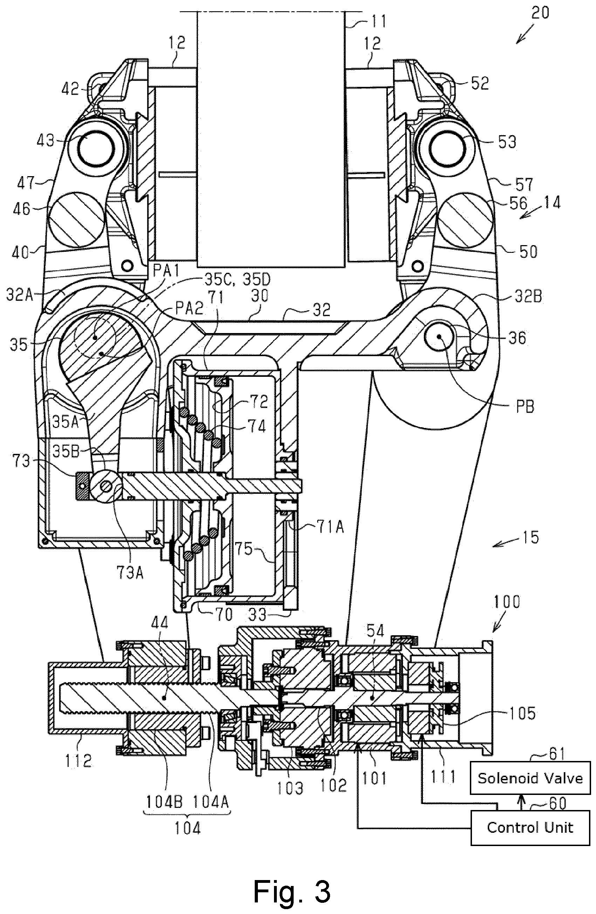

As shown in Fig. 3, to apply service braking, the brake caliper device 20 drives the pneumatic cylinder 70 until the brake pads 2 eventually touch the disc 11 and drives the electric cylinder 100 so that the brake pads 12 press the disc 11. First, compressed air is fed to the first space 75 of the pneumatic cylinder 70. In response to the compressed air being fed to the pneumatic cylinder 70, the first rod 73 of the pneumatic cylinder 70 moves in such a direction that it will project out of the first cylinder chamber 71 along with the first piston 72, so that the rotation lever 35A can be driven clockwise via the roller 35B. Note that, while the pneumatic cylinder 70 is in operation, the electric cylinder 100 remains suspended.

As the first rod 73 moves in such a direction that it will project from the first cylinder chamber 71, the rotation lever 35A rotates clockwise along with the left rotating portion 35 about the eccentric axis PA2. The clockwise rotation of the left rotating portion 35 about the eccentric axis PA2 causes the left arm 40 to rotate about the axis of rotation 44 in such a direction that the left brake pad 12 will contact the disc 11, and thus the left brake pad 12 contacts the disc 11. In other words, the distance between the left and right arms 40 and 50 is reduced.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11.

After both of the brake pads 12 touch the disc 11, the electric motor 101 of the electric cylinder 100 is driven in the forward direction. Since the electric motor 101 rotates the drive shaft 102 in the forward direction, the screw shaft 104A rotates via the speed reducer 103. As a result, the nut 104B is rotated, so that the second casing 112 moves away from the first casing 111. These movements take place while the electromagnetic brake 105 is not in operation. Note that, while the electric cylinder 100 is in operation, the pneumatic cylinder 70 is suspended.

As the second casing 112 moves away from the first casing 111, the left and right brake pads 12 press the surfaces of the disc 11, so that the rotation of the disc 11 is restrained. The braking is adjusted by changing the pressing force applied by the brake pads 12.

To keep the service braking, the brake caliper device 20 actuates the electromagnetic brake 105 of the electric motor 101. This restrains the electric cylinder 100 from operating and also suspends the electric motor 101. In this way, the service braking is kept in operation.

When the brake pads 12 are worn out, the electric cylinder 100 operates in the same manner as a result of the driving of the electric motor 101. The amount of movement of the nut 104B, however, increases as the amount of wear of the brake pads 12 increases. If the amount of wear of the brake pads 12 increases to such an extent that the amount of movement of the first rod 73 of the nut 104B becomes equal to or greater than a predetermined value, the electric cylinder 100 comes into operation. Specifically, the control unit 60 causes the electric cylinder 100 to be elongated to shorten the gaps between the brake pads 12 and the disc 11.

As shown in Fig. 2, to release the service braking, the brake caliper device 20 drives the electric cylinder 100 in the reverse direction so that the brake pads 12 no longer presses the disc 11 and the contact between the brake pads 12 and the disc 11 established by the pneumatic cylinder 70 is undone. To begin with, the electric motor 101 of the electric cylinder 100 is driven in the opposite direction. As the electric motor 101 rotates the drive shaft 102 in the reverse direction, the screw shaft 104A rotates in the reverse direction via the speed reducer 103. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other. This stops the brake pads 12 from pressing the disc 11.

The feeding of the compressed air to the pneumatic cylinder 70 is interrupted, and the compressed air is discharged. As the compressed air is discharged from the pneumatic cylinder 70, the first rod 73 moves back to the first cylinder chamber 71. The rotation lever 35A rotates anticlockwise along with the left rotating portion 35 about the eccentric axis PA2. The anticlockwise rotation of the left rotating portion 35 about the eccentric axis PA2 causes the left arm 40 to rotate about the axis of rotation 44 in such a direction that the left brake pad 12 will move away from the disc 11, and thus the left brake pad 12 moves away from the disc 11.

### <Parking Braking>

To provide parking braking, the brake caliper device 20 actuates the electromagnetic brake 105 of the electric cylinder 100 to suspend the operation of the electric motor 101 while the left and right brake pads 12 press the respective surfaces of the disc 11. To manually release the parking braking, a manual release mechanism of the electromagnetic brake 105 is operated.

### <Security Braking>

As shown in Fig. 3, the brake caliper device 20 is configured such that compressed air is fed into the first space 75 in the pneumatic cylinder 70 to apply security braking. In response to the compressed air being fed to the pneumatic cylinder 70, the first rod 73 of the pneumatic cylinder 70 moves in such a direction that it will project out of the first cylinder chamber 71 along with the first piston 72, so that the rotation lever 35A can be driven clockwise via the roller 35B. Note that, while the pneumatic cylinder 70 is in operation, the electric cylinder 100 is suspended.

As the first rod 73 moves in such a direction that it will project from the first cylinder chamber 71, the rotation lever 35A rotates clockwise along with the left rotating portion 35 about the eccentric axis PA2. The rotation of the left rotating portion 35 causes the fulcrum axis PA1 to rotate clockwise about the eccentric axis PA2. This causes the left arm 40 to rotate about the rotational axis 44 in such a direction that the left brake pad 12 will contact the disc 11, and thus the left brake pad 12 contacts the disc 11.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11. Thus, both sides of the disc 11 are pressed by the left and right brake pads 12 to restrain the rotation of the disc 11. The braking is adjusted by changing the pressing force applied by the brake pads 12.

As shown in Fig. 2, to release the security braking, the brake caliper device 20 interrupts the feeding of the compressed air to the pneumatic cylinder 70 and causes the compressed air to be discharged. As the compressed air is discharged from the pneumatic cylinder 70, the first rod 73 moves back to the first cylinder chamber 71. The rotation lever 35A rotates anticlockwise along with the left rotating portion 35 about the eccentric axis PA2. The rotation of the left rotating portion 35 causes the fulcrum axis PA1 to rotate anticlockwise about the eccentric axis PA2. This causes the left arm 40 to rotate about the axis of rotation 44 in such a direction that the left brake pad 12 will move away from the disc 11, and thus the left brake pad 12 moves away from the disc 11.

### <Service Braking>

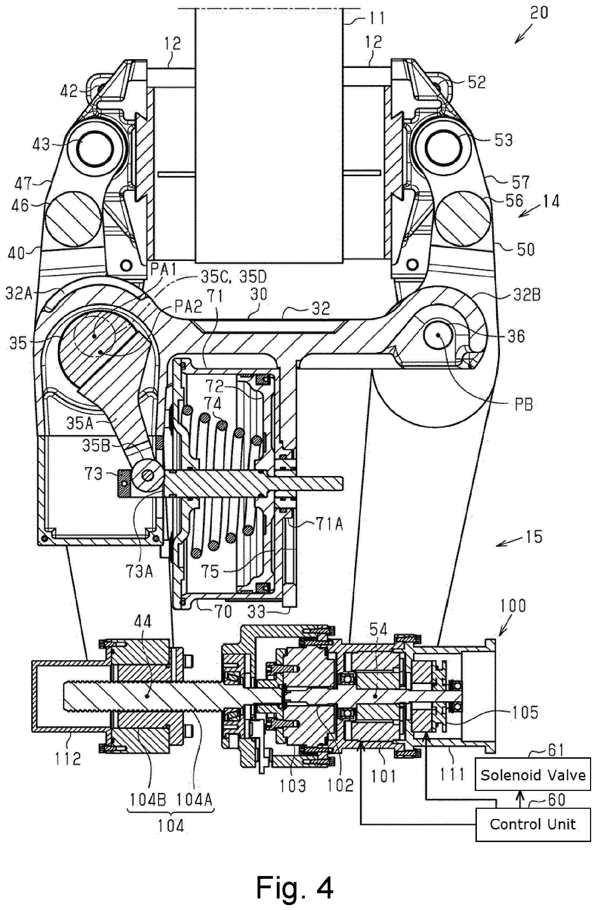

As shown in Fig. 4, the brake caliper device 20 may be configured such that the service braking can be provided only using the electric cylinder 100. In the brake caliper device 20, the electric motor 101 of the electric cylinder 100 is driven in the forward direction. Since the electric motor 101 rotates the drive shaft 102 in the forward direction, the screw shaft 104A rotates via the speed reducer 103. As a result, the nut 104B is rotated, so that the second casing 112 moves away from the first casing 111. Note that, while the electric cylinder 100 is in operation, the pneumatic cylinder 70 is suspended.

As the second casing 112 moves away from the first casing 111, the axis of rotation 44 of the left arm 40 and the axis of rotation 54 of the right arm 50 move away from each other. The left arm 40 rotates about the fulcrum axis PA1 in such a direction that the left brake pad 12 will touch the disc 11. As a result, the left brake pad 12 touches the disc 11.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11. Thus, the disc 11 is pressed on both sides by the left and right brake pads 12 to restrain the rotation of the disc 11. The braking is adjusted by changing the pressing force applied by the brake pads 12.

To keep the service braking, the brake caliper device 20 actuates the electromagnetic brake 105. This restrains the operation of the electric cylinder 100 and also suspends the electric motor 101. In this way, the service braking is kept in operation.

To release the service braking, the electric motor 101 of the electric cylinder 100 is driven in the reverse direction in the brake caliper device 20. As the electric motor 101 rotates the drive shaft 102 in the reverse direction, the screw shaft 104A rotates in the reverse direction via the speed reducer 103. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other. This stops the brake pads 12 from pressing the disc 11.

As the axis of rotation 44 of the left arm 40 and the axis of rotation 54 of the right arm 50 move toward each other, the left arm 40 rotates about the fulcrum axis PA1 in such a direction that the left brake pad 12 moves away from the disc 11. As a result, the left brake pad 12 moves away from the disc 11.

Advantageous of the first embodiment will be now described.
(1-1) The brake caliper device 20 includes: the electric cylinder 100 for driving the base ends of the left and right arms 40 and 50; and the pneumatic cylinder 70 for driving the left rotating portion 35 of the left arm 40. If one of the drive units becomes incapable of operating, the other drive unit may operate. The brake caliper device 20 can thus provide for redundancy and achieve higher reliability.
(1-2) The brake caliper device 20 includes: the electric cylinder 100 for driving the base ends of the left and right arms 40 and 50; and the pneumatic cylinder 70 for driving the rotation lever 35A to rotate the left rotating portion 35 about the eccentric axis PA2. Since the pneumatic cylinder 70 drives the left arm 40 via an eccentric mechanism, the pneumatic cylinder 70 can drive the left arm 40 at a higher mechanical advantage than can the electric cylinder 100.
(1-3) When the electric cylinder 100 is in operation, the first spring 74 prevents the pneumatic cylinder 70 from operating. When the pneumatic cylinder 70 is in operation, the electromagnetic brake 105 prevents the electric cylinder 100 from operating. In this way, the electric and pneumatic cylinders 100 and 70 can be driven independently without interfering with each other.
(1-4) When one of the electric and pneumatic cylinders 100 and 70 experiences abnormalities, the control unit 60 drives the other of the electric and pneumatic cylinders 100 and 70. This can provide for redundancy and thus improved reliability.
(1-5) When one of the electric and pneumatic cylinders 100 and 70 is driven, the other of the electric and pneumatic cylinders 100 and 70 is suspended. In this way, the electric and pneumatic cylinders 100 and 70 can be driven independently without interfering with each other.
(1-6) The driving force may be distributed between the electric and pneumatic cylinders 100 and 70. This can lower the driving force each of the electric and pneumatic cylinders 100 and 70 is required to produce. As a result, the electric and pneumatic cylinders 100 and 70 can have a reduced size.
(1-7) Driving the rotation lever 35A results in driving the left arm 40 via the left rotating portion 35. This means that the pneumatic cylinder 70 can drive the left and right arms 40 and 50 at a high mechanical advantage, so that the pneumatic cylinder 70 can achieve a reduced size. Since the base ends of the left and right arms 40 and 50 can drive the left and right arms 40 and 50 at a low mechanical advantage, the electric cylinder 100 can efficiently reduce the distance between the brake pads 12 and the disc 11.

### <Second Embodiment>

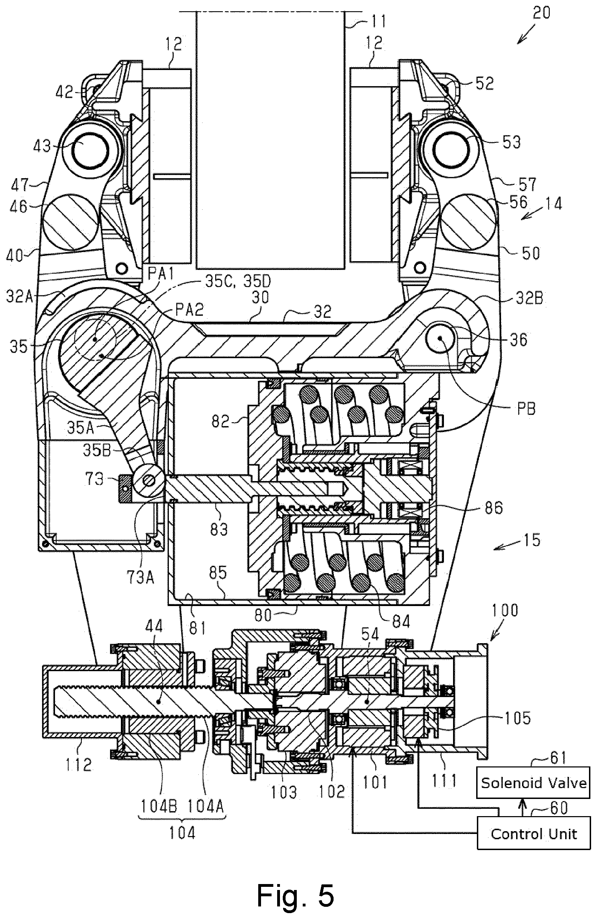

With reference to Fig. 5, a brake caliper device relating to a second embodiment will now be described. The second embodiment is different from the first embodiment in terms of the drive device. The following description will be focused on the differences between the first and second embodiments.

### <Drive Device 15>

As shown in Fig 5, a drive device 15 includes a spring cylinder 80 and an electric cylinder 100. While the electric cylinder 100 functions as a service brake, the spring cylinder 80 functions as a parking brake and a security brake. The electric cylinder 100 is configured in the same manner as in the first embodiment.

The spring cylinder 80 is configured to brake the railway vehicle having a wheel by driving the left and right arms 40 and 50 such that the relative distance between their tip ends decreases and the brake pads 12 resultantly sandwich the disc 11. The spring cylinder 80 is mounted to a body 30. The spring cylinder 80 serves as a second drive unit.

### <Spring Cylinder 80>

The spring cylinder 80 includes a second cylinder chamber 81, a second piston 82, a second rod 83, a second spring 84 and an electromagnetic clutch 86. The second piston 82 is movable within the second cylinder chamber 81. The second rod 83 is fixedly attached to the second piston 82 and projects from the second cylinder chamber 81. The second spring 84 energizes the second piston 82 in such a direction that the second rod 83 projects from the second cylinder chamber 81. In the second cylinder chamber 81, the second spring 84 is provided on one of the sides defined with respect to the second piston 82, and a second space 85 is defined on the other side. The spring cylinder 80 includes a second feeding port (not shown) for feeding compressed air into the second space 85 within the second cylinder chamber 81. The second feeding port is provided outside the second cylinder chamber 81. When the compressed air is fed into the second space 85 within the second cylinder chamber 81, the second piston 82 is pushed such that the second rod 83 is accommodated into the second cylinder chamber 81. The electromagnetic clutch 86 restrains the movement of the second piston 82 when powered, so that the energizing force of the second spring 84 remains stored. When powered off, on the other hand, the electromagnetic clutch 86 is released. As a result, the second piston 82 is allowed to move and is pushed by the energizing force applied by the second spring 84. When the second spring 84 pushes the second piston 82, the second rod 83 projects from the second cylinder chamber 81 and resultantly pushes the first rod 73, so that the first rod 73 projects outside. The electromagnetic clutch 86 serves as a second restraining unit. The electromagnetic clutch 86 has a manual release mechanism, which is not shown.

A rotatable roller 35B is attached to the tip end of the rotation lever 35A. The first rod 73 has a receiving portion 73A provided in the tip end thereof. The receiving portion 73A is a through-hole for receiving therein the roller 35B while touching the roller 35B. The receiving portion 73A is configured to transmit the driving force from the first rod 73 to the rotation lever 35A, while absorbing the lag between the linear movement of the first rod 73 and the rotational movement of the rotation lever 35A. The spring cylinder 80 rotates the rotation lever 35A to rotate the left rotating portion 35, so that the tip end of the left arm 40 is brought closer to the tip end of the right arm 50.

### <Control Unit 60>

The brake caliper device 20 includes a control unit 60. The control unit 60 controls the spring and electric cylinders 80 and 100. The control unit 60 controls a solenoid valve 61 to control the spring cylinder 80. The solenoid valve 61 switches whether to feed compressed air to the spring cylinder 80. The solenoid valve 61 is opened when turned on and closed when turned off. The control unit 60 controls the electric motor 101 to control the electric cylinder 100. The control unit 60 controls the electromagnetic brake 105.

When driving the electric cylinder 100, the control unit 60 actuates the electromagnetic clutch 86 to restrain the spring cylinder 80 from operating. This means that, when the electric cylinder 100 is in operation, the electromagnetic clutch 86 is in operation so that the spring cylinder 80 is prevented from operating. When driving the spring cylinder 80, on the other hand, the control unit 60 actuates the electromagnetic brake 105 to restrain the electric cylinder 100 from operating. This means that, when the spring cylinder 80 is in operation, the electromagnetic brake 105 is in operation so that the electric cylinder 100 is prevented from operating.

When one of the spring and electric cylinders 80 and 100 experiences abnormalities, the control unit 60 drives the other of the spring and electric cylinders 80 and 100. The railway vehicle may not slow down even while the spring or electric cylinder 80 or 100 is in operation. If this is detected, this may indicate that abnormalities occur in the spring or electric cylinder 80 or 100. Whether abnormalities occur in the electric cylinder 100 can be detected by sensing abnormalities in current flowing through the electric motor 101. In this manner, the brake caliper device 20 can provide for redundancy and thus improved reliability.

When allowing one of the spring and electric cylinders 80 and 100 to operate, the control unit 60 prevents the other of the spring and electric cylinders 80 and 100 from operating. When the spring cylinder 80 is suspended, the electromagnetic clutch 86 is in operation. When the electric cylinder 100 is suspended, the electric motor 101 is powered off. In this way, the electric and spring cylinders 100 and 80 can be driven independently without interfering with each other.

### <Operation>

The following now describes how the brake caliper device 20 described above works.

### <Service Braking>

As shown in Fig. 5, the brake caliper device 20 may be configured such that the service braking can be provided by the electric cylinder 100. In the brake caliper device 20, the electric motor 101 of the electric cylinder 100 is driven in the forward direction. Since the electric motor 101 rotates the drive shaft 102 in the forward direction, the screw shaft 104A rotates via the speed reducer 103. As a result, the nut 104B is rotated, so that the second casing 112 moves away from the first casing 111. These movements take place while the electromagnetic brake 105 is not in operation. Note that, while the electric cylinder 100 is in operation, the spring cylinder 80 is suspended.

As the second casing 112 moves away from the first casing 111, the axis of rotation 44 of the left arm 40 and the axis of rotation 54 of the right arm 50 move away from each other. The left arm 40 rotates about the fulcrum axis PA1 in such a direction that the left brake pad 12 touches the disc 11. As a result, the left brake pad 12 touches the disc 11. In other words, the distance between the left and right arms 40 and 50 is reduced.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11. Thus, the disc 11 is pressed on both sides by the left and right brake pads 12 to restrain the rotation of the disc 11. The braking is adjusted by changing the pressing force applied by the brake pads 12.

To keep the service braking, the brake caliper device 20 actuates the electromagnetic brake 105 to suspend the electric cylinder 100. In this way, the service braking is kept in operation.

To release the service braking, the electric motor 101 of the electric cylinder 100 is driven in the reverse direction in the brake caliper device 20. As the electric motor 101 rotates the drive shaft 102 in the reverse direction, the screw shaft 104A rotates in the reverse direction via the speed reducer 103. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other.

As the axis of rotation 44 of the left arm 40 and the axis of rotation 54 of the right arm 50 move toward each other, the left arm 40 rotates about the fulcrum axis PA1 in such a direction that the left brake pad 12 moves away from the disc 11. As a result, the left brake pad 12 moves away from the disc 11.

### <Parking Braking>

To apply parking braking, the brake caliper device 20 actuates the electromagnetic brake 105 of the electric cylinder 100 to suspend the operation of the electric motor 101 while the left and right brake pads 12 press the respective surfaces of the disc 11. In addition, the electromagnetic clutch 86 of the spring cylinder 80 is released to cause the second spring 84 to press the first rod 73. The parking brake remains in operation due to the energizing force produced by the spring cylinder 80. To manually release the parking braking, a manual release mechanism of the electromagnetic brake 105 is operated.

### <Security Braking>

To provide security braking, the brake caliper device 20 actuates the electromagnetic brake 105 of the electric cylinder 100 to suspend the operation of the electric motor 101. In addition, the electromagnetic clutch 86 of the spring cylinder 80 is released to cause the second spring 84 to press the first rod 73. The security braking remains in operation due to the energizing force produced by the spring cylinder 80.

To release the security braking, the brake caliper device 20 suspends the electromagnetic brake 105 of the electric cylinder 100 and drives the electric motor 101 in the reverse direction. As the electric motor 101 rotates the drive shaft 102 in the reverse direction, the screw shaft 104A rotates in the reverse direction via the speed reducer 103. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other. This stops the brake pads 12 from pressing the disc 11.

Advantages of the second embodiment will be now described.
(2-1) The brake caliper device 20 includes: the electric cylinder 100 for driving the base ends of the left and right arms 40 and 50; and the spring cylinder 80 for driving the left rotating portion 35 of the left arm 40. If one of the drive units becomes incapable of operating, the other drive unit may operate. The brake caliper device 20 can thus provide for redundancy and achieve higher reliability.
(2-2) The brake caliper device 20 includes: the electric cylinder 100 for driving the base ends of the left and right arms 40 and 50; and the spring cylinder 80 for driving the rotation lever 35A to rotate the left rotating portion 35 about the eccentric axis PA2. Since the spring cylinder 80 drives the left arm 40 via an eccentric mechanism, the spring cylinder 80 can drive the left arm 40 at a higher mechanical advantage than can the electric cylinder 100.
(2-3) When the electric cylinder 100 is in operation, the electromagnetic clutch 86 prevents the spring cylinder 80 from operating. When the spring cylinder 80 is in operation, the electromagnetic brake 105 prevents the electric cylinder 100 from operating. In this way, the electric and spring cylinders 100 and 80 can be driven independently without interfering with each other.
(2-4) When one of the electric and spring cylinders 100 and 80 experiences abnormalities, the control unit 60 drives the other of the electric and spring cylinders 100 and 80. This can provide for redundancy and thus improved reliability.
(2-5) When one of the electric and spring cylinders 100 and 80 operates, the other of the electric and spring cylinders 100 and 80 is suspended. Therefore, the electric and spring cylinders 100 and 80 can be driven independently without interfering with each other.

### <Third Embodiment>

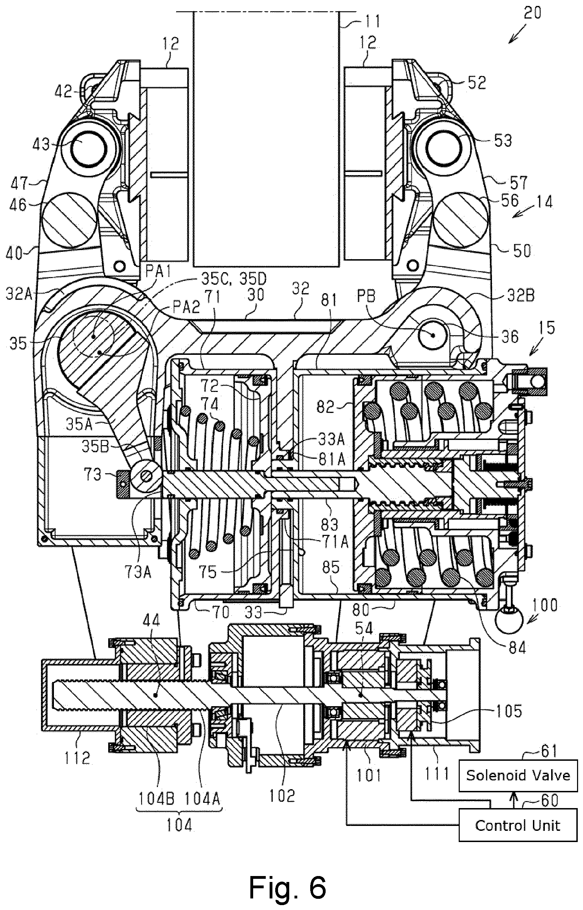

With reference to Fig. 6, a brake caliper device relating to a third embodiment will now be described. The third embodiment is different from the first embodiment in terms of the drive device. The following description will be focused on the differences between the first and third embodiments.

### <Drive Device 15>

As shown in Fig 6, a drive device 15 includes a pneumatic cylinder 70, a spring cylinder 80 and an electric cylinder 100. While the electric and pneumatic cylinders 100 and 70 function as a service brake, the spring cylinder 80 functions as a parking brake and a security brake. The electric and pneumatic cylinders 100 and 70 are configured in the same manner as in the first embodiment. The spring cylinder 80 is configured in the same manner as in the second embodiment.

The pneumatic cylinder 70 is mounted to the left-side surface of the second support portion 33 of the body 30. The spring cylinder 80 is mounted to the right-side surface of the second support portion 33 of the body 30. This means that the pneumatic and spring cylinders 70 and 80 sandwich the second support portion 33 of the body 30. The surfaces of the second support portion 33 to which the pneumatic and spring cylinders 70 and 80 are mounted are parallel to the extension direction of the left and right arms 40 and 50 and to the surfaces of the brake pads 12.

The second support portion 33 of the body 30 has an opening 33A formed at the center thereof. The opening 33A is elongated in the longitudinal direction of the left and right arms 40 and 50. This allows, in mounting and removing the pneumatic and spring cylinders 70 and 80, the pneumatic and spring cylinders 70 and 80 to move in the opening 33A in the longitudinal direction of the left and right arms 40 and 50.

When the compressed air is fed into the second space 85 within the second cylinder chamber 81 of the spring cylinder 80 of the third embodiment, the second piston 82 is pushed such that the second rod 83 is accommodated into the second cylinder chamber 81. When the compressed air is discharged from the second space 85 in the second cylinder chamber 81, the second spring 84 pushes the second piston 82, so that the second rod 83 projects from the second cylinder chamber 81 and projects into the first cylinder chamber 71. The second rod 83 then pushes the first piston 72, so that the first rod 73 protrudes to push the rotation lever 35A.

The first cylinder chamber 71 includes a first projecting portion 71A that projects through the opening 33A. The second cylinder chamber 81 includes a second projecting portion 81A that projects through the opening 33A. The second projecting portion 81A is penetrated by the second rod 83. The first projecting portion 71A is fitted around the second projecting portion 81A. With such arrangement, the first rod 73 of the pneumatic cylinder 70 and the second rod 83 of the spring cylinder 80 are positioned coaxially, and the output of the spring cylinder 80 is transmitted to the pneumatic cylinder 70. While the first rod 73 of the pneumatic cylinder 70 is allowed to move, the second rod 83 of the spring cylinder 80 is prevented from moving.

The electric cylinder 100 of the third embodiment has no speed reducer, and the drive shaft 102 and the screw shaft 104A of the ball screw 104 are connected or molded as a single piece. As the electric motor 101 rotates the drive shaft 102, the screw shaft 104A also rotates.

The control unit 60 drives the electric cylinder 100 until the brake pads 12 eventually touch the disc 11 and drives the pneumatic cylinder 70 so that the brake pads 12 press the disc 11. To provide parking braking, the control unit 60 drives the spring cylinder 80 to cause the brake pads 12 to press the disc 11. Therefore, the force produced by the second spring 84 of the spring cylinder 80 may be applied to the brake pads 12, which are already pressing the disc 11. In this manner, the springs can have a reduced size.

### <Operation>

The following now describes how the brake caliper device 20 works.

### <Service Braking>

As shown in Fig. 6, to provide service braking, the brake caliper device 20 drives the electric cylinder 100 until the brake pads 2 eventually touch the disc 11 and drives the pneumatic cylinder 70 so that the brake pads 12 press the disc 11. In the brake caliper device 20, the electric motor 101 of the electric cylinder 100 is first driven in the forward direction. Since the electric motor 101 rotates the drive shaft 102 in the forward direction, the screw shaft 104A rotates. As a result, the nut 104B is rotated, so that the second casing 112 moves away from the first casing 111. These movements take place while the electromagnetic brake 105 is not in operation. Note that, while the electric cylinder 100 is in operation, the spring cylinder 80 is suspended.

As the second casing 112 moves away from the first casing 111, the axis of rotation 44 of the left arm 40 and the axis of rotation 54 of the right arm 50 move away from each other. The left arm 40 rotates about the fulcrum axis PA1 in such a direction that the left brake pad 12 touches the disc 11. As a result, the left brake pad 12 touches the disc 11. In other words, the distance between the left and right arms 40 and 50 is reduced.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11.

After both of the brake pads 12 touch the disc 11, compressed air is fed to the first space 75 of the pneumatic cylinder 70. In response to the compressed air being fed to the pneumatic cylinder 70, the first rod 73 of the pneumatic cylinder 70 moves in such a direction that it projects out of the first cylinder chamber 71 along with the first piston 72, so that the rotation lever 35A can be driven clockwise via the roller 35B. Note that, while the pneumatic cylinder 70 is in operation, the electric cylinder 100 is suspended.

As the first rod 73 moves in such a direction that it projects from the first cylinder chamber 71, the rotation lever 35A rotates clockwise along with the left rotating portion 35 about the eccentric axis PA2. As the left rotating portion 35 rotates clockwise about the eccentric axis PA2, the left and right brake pads 12 press the disc 11 on both sides to restrain the rotation of the disc 11. The braking is adjusted by changing the pressing force applied by the brake pads 12.

To keep the service braking, the brake caliper device 20 actuates the electromagnetic brake 105 of the electric motor 101. This restrains the operation of the electric cylinder 100 and also suspends the electric motor 101. In this way, the service braking is kept in operation.

To release the service braking, the brake caliper device 20 interrupts the feeding of the compressed air to the pneumatic cylinder 70 and causes the compressed air to be discharged. As the compressed air is discharged from the pneumatic cylinder 70, the first rod 73 moves back to the first cylinder chamber 71. This stops the brake pads 12 from pressing the disc 11.

The electric motor 101 of the electric cylinder 100 is then driven in the reverse direction. As the electric motor 101 rotates the drive shaft 102 in the reverse direction, the screw shaft 104A rotates in the reverse direction. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other. As a result, the brake pads 12 move away from the disc 11.

### <Parking Braking>

To apply parking braking, the brake caliper device 20 actuates the second spring 84 of the spring cylinder 80 to cause the second rod 83 of the spring cylinder 80 to project out of the second cylinder chamber 81 while the left and right brake pads 12 press the respective surfaces of the disc 11. To manually release the parking braking, a manual release mechanism of the spring cylinder 80 is operated.

### <Security Braking>

To provide security braking, the compressed air is discharged from the second space 85 in the second cylinder chamber 81 of the brake caliper device 20, so that the second spring 84 pushes the second piston 82. As a result, the second rod 83 projects from the second cylinder chamber 81 and projects into the first cylinder chamber 71. The second rod 83 then pushes the first piston 72, so that the first rod 73 protrudes to push the rotation lever 35A. The security braking remains in operation due to the energizing force produced by the spring cylinder 80.

To release the security braking, the compressed air is fed to the second space 85 in the second cylinder chamber 81 of the brake caliper device 20, so that the second piston 82 is pushed. As a result, the second rod 83 is housed in the second cylinder chamber 81. The first spring 74 pushes the first rod 73 so that the first rod 73 can be contained in the first cylinder chamber 71, and the rotation lever 35A rotates anticlockwise along with the left rotating portion 35 about the eccentric axis PA2. The rotation of the left rotating portion 35 causes the fulcrum axis PA1 to rotate anticlockwise about the eccentric axis PA2. This causes the left arm 40 to rotate about the rotational axis 44 in such a direction that the left brake pad 12 moves away from the disc 11. As a result, the left brake pad 12 moves away from the disc 11.

Advantages of the third embodiment will be now described.
(3-1) The brake caliper device 20 includes: the electric cylinder 100 for driving the base ends of the left and right arms 40 and 50; and the pneumatic and spring cylinders 70 and 80 for driving the left rotating portion 35 of the left arm 40. If one of the drive units becomes incapable of operating, the other drive units may operate. The brake caliper device 20 can thus provide for redundancy and achieve higher reliability.
(3-2) The brake caliper device 20 includes: the electric cylinder 100 for driving the base ends of the left and right arms 40 and 50; and the pneumatic and spring cylinders 70 and 80 for driving the rotation lever 35A to rotate the left rotating portion 35 about the eccentric axis PA2. Since the pneumatic and spring cylinders 70 and 80 drive the left arm 40 via an eccentric mechanism, the pneumatic and spring cylinders 70 and 80 can drive the left arm 40 at a higher mechanical advantage than can the electric cylinder 100.
(3-3) When the electric cylinder 100 is in operation, the first spring 74 prevents the pneumatic cylinder 70 from operating. When the pneumatic cylinder 70 is in operation, the electromagnetic brake 105 prevents the electric cylinder 100 from operating. In this way, the electric and pneumatic cylinders 100 and 70 can be driven independently without interfering with each other.
(3-4) When one of the electric and pneumatic cylinders 100 and 70 experiences abnormalities, the control unit 60 drives the other of the electric and pneumatic cylinders 100 and 70. This can provide for redundancy and thus improved reliability.
(3-5) When one of the electric and pneumatic cylinders 100 and 70 is driven, the other of the electric and pneumatic cylinders 100 and 70 is suspended. In this way, the electric and pneumatic cylinders 100 and 70 can be driven independently without interfering with each other.
(3-6) The driving force may be distributed between the electric and pneumatic cylinders 100 and 70. This can lower the driving force each of the electric and pneumatic cylinders 100 and 70 is required to produce. As a result, the electric and pneumatic cylinders 100 and 70 can have a reduced size.

### <Fourth Embodiment>

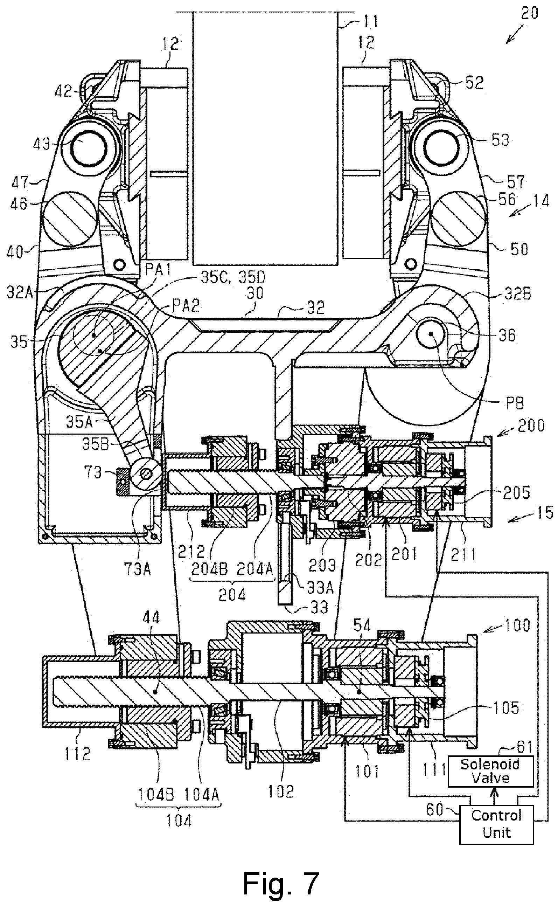

With reference to Fig. 7, a brake caliper device relating to a fourth embodiment will now be described. The fourth embodiment is different from the first embodiment in terms of the drive device. The following description will be focused on the differences between the first and fourth embodiments.

### <Drive Device 15>

As shown in Fig 7, a drive device 15 includes an electric cylinder 100 and an electric cylinder 200. While the electric cylinder 100 functions as a service brake and a parking brake, the electric cylinder 200 functions as a security brake. The electric cylinder 100 is configured in the same manner as in the third embodiment. The electric cylinder 200 is configured in the same manner as the electric cylinder 100 of the first embodiment.

The electric cylinder 200 is mounted to a second support portion 33 of a body 30. The second support portion 33 of the body 30 has an opening 33A formed at the center thereof. The opening 33A is elongated in the longitudinal direction of the left and right arms 40 and 50. This allows, in mounting and removing the electric cylinder 200, the electric cylinder 200 to move in the opening 33A in the longitudinal direction of the left and right arms 40 and 50.

The electric cylinder 200 includes a first casing 211 and a second casing 212. The first and second casings 211 and 212 are separate casings. The first casing 211 is mounted to the second support portion 33 of the body 30. A first rod 73 is connected to the tip end of the second casing 212.

The electric cylinder 200 has an electric motor 201, a speed reducer 203, a ball screw 204, and an electromagnetic brake 205. The electric motor 201, speed reducer 203 and electromagnetic brake 205 are housed in the first casing 211. The driving force produced by the electric motor 201 is transmitted to the ball screw 204 via the speed reducer 203. The electric motor 201 has a drive shaft 202. The drive shaft 202 is coupled to the speed reducer 203. The ball screw 204 has a screw shaft 204A and a nut 204B. The screw shaft 204A is coupled to the speed reducer 203. The inner wall of the nut 204B has internal threads that are configured to engage with the external threads of the screw shaft 204A. The nut 204B rotates relative to the screw shaft 204A while engaging with the external threads of the screw shaft 204A. The nut 204B moves in the axial direction of the screw shaft 204A as the screw shaft 204A rotates. The ball screw 204 is a mechanism for converting rotational motion into linear motion. The nut 204B is fixedly attached to the second casing 212. When the electric motor 201 is driven, the screw shaft 204A rotates, so that the nut 204B linearly moves. This causes the second casing 212 to move relative to the first casing 211. The electromagnetic brake 205 is connected to the drive shaft 202 on the opposite side of the speed reducer 203. When current is fed to the electromagnetic brake 205, the electromagnetic brake 205 prevents the drive shaft 202 from rotating. When no current is fed to the electromagnetic brake 205, on the other hand, the electromagnetic brake 205 allows the drive shaft 202 to rotate. The electromagnetic brake 205 serves as a second restraining unit. The brake caliper device 20 functions as a parking brake by putting the electromagnetic brake 205 into operation while the electric cylinder 200 is applying a braking force. The electromagnetic brake 205 has a manual release mechanism, which is not shown.

### <Control Unit 60>

The control unit 60 controls the electric cylinders 100 and 200. The control unit 60 controls the electric motor 101 to control the electric cylinder 100. The control unit 60 controls the electric motor 201 to control the electric cylinder 200. The control unit 60 controls the electromagnetic brakes 105 and 205.

When driving the electric cylinder 100, the control unit 60 actuates the electromagnetic brake 205 to restrict the electric cylinder 200 from operating. This means that, when the electric cylinder 100 is in operation, the electromagnetic brake 205 is in operation so that the electric cylinder 200 is prevented from operating. When driving the electric cylinder 200, on the other hand, the control unit 60 actuates the electromagnetic brake 105 to restrict the electric cylinder 100 from operating. This means that, when the electric cylinder 200 is in operation, the electromagnetic brake 105 is in operation so that the electric cylinder 100 is prevented from operating.

When one of the electric cylinders 100 and 200 experiences abnormalities, the control unit 60 drives the other of the electric cylinders 100 and 200. The railway vehicle may not slow down even while one of the electric cylinders 100 and 200 is in operation. If this is detected, this may indicate that abnormalities occur in the corresponding one of the electric cylinders 100 and 200. Whether abnormalities occur in the electric cylinders 100 and 200 can be detected by sensing abnormalities in current flowing through the respective electric motors 101 and 201. In this manner, the brake caliper device 20 can provide for redundancy and thus improved reliability.

When allowing one of the electric cylinders 100 and 200 to operate, the control unit 60 prevents the other of the electric cylinders 100 and 200 from operating. When the electric cylinder 100 is suspended, the electric motor 101 is not turned on. When the electric cylinder 200 is suspended, the electric motor 201 is not turned on. In this way, the electric cylinders 100 and 200 can be driven independently without interfering with each other.

### <Operation>

The following now describes how the above-described brake caliper device 20 works.

### <Service Braking>

As shown in Fig. 7, to apply service braking, the brake caliper device 20 drives the electric cylinder 100 until the brake pads 12 eventually touch the disc 11 and drives the electric cylinder 200 so that the brake pads 12 press the disc 11. The electric cylinder 100 is first driven. In the brake caliper device 20, the electric motor 101 of the electric cylinder 100 is driven in the forward direction. Since the electric motor 101 rotates the drive shaft 102 in the forward direction, the screw shaft 104A also rotates. As a result, the nut 104B is rotated, so that the second casing 112 moves away from the first casing 111. These movements take place while the electromagnetic brake 105 is not in operation. Note that, while the electric cylinder 100 is in operation, the electric cylinder 200 is suspended.

As the second casing 112 moves away from the first casing 111, the axis of rotation 44 of the left arm 40 and the axis of rotation 54 of the right arm 50 move away from each other. The left arm 40 rotates about the fulcrum axis PA1 in such a direction that the left brake pad 12 touches the disc 11. As a result, the left brake pad 12 touches the disc 11. In other words, the distance between the left and right arms 40 and 50 is reduced.

After the left brake pad 12 contacts the disc 11, the left arm 40 rotates clockwise about the pad rotation pins 43. When the left arm 40 rotates about the pad rotation pins 43, the right arm 50 rotates clockwise about the fulcrum axis PB of the right rotating portion 36 via the axis of rotation 44, the electric cylinder 100, and the axis of rotation 54, so that the right brake pad 12 contacts the disc 11.

After both of the brake pads 12 touch the disc 11, the electric motor 201 of the electric cylinder 200 is driven in the forward direction. Since the electric motor 201 rotates the drive shaft 202 in the forward direction, the screw shaft 204A also rotates. As a result, the nut 204B is rotated, so that the second casing 212 moves away from the first casing 211.

As the second casing 212 moves away from the first casing 211, the first rod 73 moves so that the rotation lever 35A can be driven clockwise via the roller 35B. These movements take place while the electromagnetic brake 205 is not in operation. Note that, while the electric cylinder 200 is in operation, the electric cylinder 100 is suspended.

As the first rod 73 moves, the rotation lever 35A rotates clockwise along with the left rotating portion 35 about the eccentric axis PA2. As the left rotating portion 35 rotates clockwise about the eccentric axis PA2, the disc 11 is pressed on both sides by the left and right brake pads 12 to restrain the rotation of the disc 11. The braking is adjusted by changing the pressing force applied by the brake pads 12.

To keep the service braking, the brake caliper device 20 actuates the electromagnetic brake 205 to suspend the electric cylinder 200. In this way, the service braking is kept in operation.

To release the service braking, the electric motor 201 of the electric cylinder 200 is driven in the reverse direction in the brake caliper device 20. As the electric motor 201 rotates the drive shaft 202 in the reverse direction, the screw shaft 204A rotates in the reverse direction via the speed reducer 203. As a result, the nut 204B is rotated, so that the second casing 212 moves toward the first casing 211. As the second casing 212 moves toward the first casing 211, the axis of rotation 44 of the left arm 40 and the axis of rotation 54 of the right arm 50 move toward each other. This stops the brake pads 12 from pressing the disc 11.

The electric motor 101 of the electric cylinder 100 is then driven in the reverse direction. As the electric motor 101 rotates the drive shaft 102 in the reverse direction, the screw shaft 104A also rotates in the reverse direction. As a result, the nut 104B is rotated, so that the second casing 112 moves toward the first casing 111. As the second casing 112 moves toward the first casing 111, the axis of rotation 44 of the left arm 40 and the axis of rotation 54 of the right arm 50 move toward each other. As the axis of rotation 44 of the left arm 40 and the axis of rotation 54 of the right arm 50 move toward each other, the left arm 40 rotates about the fulcrum axis PA1 in such a direction that the left brake pad 12 moves away from the disc 11. As a result, the left brake pad 12 moves away from the disc 11.

### <Parking Braking>

To provide parking braking, the brake caliper device 20 actuates the electromagnetic brake 105 of the electric cylinder 100 to suspend the operation of the electric motor 101 while the left and right brake pads 12 press the respective surfaces of the disc 11. The parking brake remains in operation due to the electromagnetic brake 105. To manually release the parking braking, a manual release mechanism of the electromagnetic brake 105 is operated.

### <Security Braking>

To provide security braking, the electric motor 201 of the electric cylinder 200 is driven in the forward direction in the brake caliper device 20. The security braking remains in operation due to the electromagnetic brake 205 of the electric cylinder 200.

To release the security braking, the brake caliper device 20 suspends the electromagnetic brake 205 of the electric cylinder 200 and drives the electric motor 201 in the reverse direction. As the electric motor 201 rotates the drive shaft 202 in the reverse direction, the screw shaft 204A rotates in the reverse direction via the speed reducer 203. As a result, the nut 204B is rotated, so that the second casing 212 moves toward the first casing 211. As the second casing 212 moves toward the first casing 211, the axis of rotation 44 of the left arm 40 and the axis of rotation 54 of the right arm 50 move toward each other. This stops the brake pads 12 from pressing the disc 11.

### Advantages of the fourth embodiment will be now described.

(4-1) The brake caliper device 20 includes: the electric cylinder 100 for driving the base ends of the left and right arms 40 and 50; and the electric cylinder 200 for driving the left rotating portion 35 of the left arm 40. If one of the drive units becomes incapable of operating, the other drive unit may operate. The brake caliper device 20 can thus provide for redundancy and achieve higher reliability.
(4-2) The brake caliper device 20 includes: the electric cylinder 100 for driving the base ends of the left and right arms 40 and 50; and the electric cylinder 200 for driving the rotation lever 35A to rotate the left rotating portion 35 about the eccentric axis PA2. Since the electric cylinder 200 drives the left arm 40 via an eccentric mechanism, the electric cylinder 200 can drive the left arm 40 at a higher mechanical advantage than can the electric cylinder 100.
(4-3) When the electric cylinder 100 is in operation, the electromagnetic brake 205 prevents the electric cylinder 200 from operating. When the electric cylinder 200 is in operation, the electromagnetic brake 105 prevents the electric cylinder 100 from operating. In this way, the electric cylinders 100 and 200 can be driven independently without interfering with each other.
(4-4) When one of the electric cylinders 100 and 200 experiences abnormalities, the control unit 60 drives the other of the electric cylinders 100 and 200. This can provide for redundancy and thus improved reliability.
(4-5) While one of the electric cylinders 100 and 200 is in operation, the other of the electric cylinders 100 and 200 is suspended. In this way, the electric cylinders 100 and 200 can be driven independently without interfering with each other.
(4-6) The driving force may be distributed between the electric cylinders 100 and 200. This can lower the driving force each of the electric cylinders 100 and 200 is required to produce. As a result, the electric cylinders 100 and 200 can have a reduced size.
(4-7) When the drive unit having a lower reduction ratio is driven, the movement is quicker and the brake pads 12 can swiftly touch the disc 11. When the drive unit having a higher reduction ratio is driven, the driving force is greater and braking can be in place when the braking force is required.

### <Other Embodiments>

The above embodiments can be modified as described below. The above embodiments and the following modifications can be implemented in combination to the extent where they are technically consistent with each other.

In the first embodiment, the control unit 60 drives the pneumatic cylinder 70 until the brake pads 12 eventually touch the disc 11 and drives the electric cylinder 100 so that the brake pads 12 press the disc 11. The control unit 60, however, may drive the electric cylinder 100 until the brake pads 12 eventually touch the disc 11 and drive the pneumatic cylinder 70 so that the brake pads 12 press the disc 11.

In the fourth embodiment, the control unit 60 drives the electric cylinder 100, which is positioned at the point of effort, until the brake pads 12 eventually touch the disc 11 and drives the electric cylinder 200, which is positioned on the fulcrum, such that the brake pads 12 press the disc 11. The control unit 60, however, may drive the electric cylinder 200, which is positioned on the fulcrum, until the brake pads 12 eventually touch the disc 11 and drive the electric cylinder 100, which is positioned on the point of effort, such that the brake pads 12 press the disc 11.

In the embodiments described above, when one of the first and second drive units is in operation, the other of the first and second drive units is suspended. Both of the first and second drive units, however, may be in operation at the same time.

In the embodiments described above, when one of the first and second drive units experiences abnormalities, the other of the first and second drive units is driven. However, when one of the first and second drive units experiences abnormalities, the abnormalities may be reported and the brake caliper device 20 may be suspended.

In the embodiments described above, while the first drive unit is in operation, the second restraining unit prevents the second drive unit from operating. While the second drive unit is in operation, the first restraining unit prevents the first drive unit from operating. The above embodiments, however, may be practiced without the first and second restraining units.

In the embodiments described above, the left rotating portion 35 is provided with the rotation lever 35A for rotating the left rotating portion 35, which is provided eccentrically with respect to the center of rotation of the left arm 40. The above embodiments, however, may be practiced without the rotation lever 35A. In this case, the left arm 40 may be directly driven.

In the embodiments described above, the first drive unit is mounted on the base ends of the left and right arms 40 and 50. However, the second parts of the left and right arms 40 and 50 do not have to be the base ends, as long as the second parts are any parts of the left and right arms 40 and 50 that are opposite with respect to the left support portion 32A (right support portion 32B) serving as a support portion, to the first part of the left arm 40 where the brake pad 12 is provided.

In the embodiments described above, the electric cylinder 100 (200) includes the electromagnetic brake 105 (205). However, the electromagnetic brake may be replaced with a mechanical clutch brake. In the embodiments described above, the electric cylinder 100 (200) includes the electric motor 101 (201) and the speed reducer 103 (203). However, the electric motor and speed reducer may be replaced with a direct drive motor.

In the foregoing embodiments, the left rotating portion 35 penetrates the body 30. Alternatively, the left rotating portion 35 does not have to penetrate the body 30 provided that the body 30 is configured to hold the left rotating portion 35.

The foregoing embodiments include a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

According to the foregoing embodiments, a plurality of functions is distributively provided. Some or all of the functions may be integrated. Any one of the functions may be partly or entirely segmented into a plurality of functions, which are distributively provided. Irrespective of whether or not the functions are integrated or distributed, they are acceptable as long as they are configured to solve the problems.

### LIST OF REFERENCE NUMBERS

- P: axis of rotation
- PA1: fulcrum axis
- PA2: eccentric axis
- PB: fulcrum axis
- 11: disc
- 12: brake pad
- 14: brake caliper
- 15: drive device
- 20: brake caliper device
- 21: bracket
- 21A: first bracket
- 21B: second bracket
- 22: coupling pin
- 30: body
- 31: base portion
- 32: first support portion
- 32A: left support portion
- 32B: right support portion
- 33: second support portion
- 33A: opening
- 35: rotating portion
- 35A: rotation lever
- 35B: roller
- 35C: upper end
- 35D: lower end
- 36: right rotating portion
- 40: left arm
- 42: pad attachment member
- 43: pad rotation pin
- 44: axis of rotation
- 45: bolt
- 46: left lever coupling pin
- 47: upper left lever
- 48: lower left lever
- 50: right arm
- 52: pad attachment member
- 53: pad rotation pin
- 54: axis of rotation
- 55: bolt
- 56: right lever coupling pin
- 57: upper right lever
- 58: lower right lever
- 60: control unit
- 61: solenoid valve
- 70: pneumatic cylinder serving as second drive unit
- 71: first cylinder chamber
- 72: first piston
- 73: first rod
- 73A: receiving portion
- 74: first spring serving as second restraining unit
- 75: first space
- 80: spring cylinder serving as second drive unit
- 81: second cylinder chamber
- 82: second piston
- 83: second rod
- 84: second spring
- 85: second space
- 86: electromagnetic clutch serving as second restraining unit
- 100: electric cylinder serving as first drive unit
- 101: electric motor
- 102: drive shaft
- 103: speed reducer
- 104: ball screw
- 104A: screw shaft
- 104B: nut
- 105: electromagnetic brake serving as first restraining unit
- 111: first casing
- 112: second casing
- 200: electric cylinder serving as second drive unit
- 201: electric motor
- 202: drive shaft
- 203: speed reducer
- 204: ball screw
- 204A: screw shaft
- 204B: nut
- 205: electromagnetic brake serving as second restraining unit
- 211: first casing
- 212: second casing

## Claims

1. A brake caliper device (20) comprising:
a pair of arms (40, 50), each arm having a pad (12) provided on a first part thereof;
a support portion (32) rotatably supporting the arms;
a first drive unit (100) configured to drive a second part of each arm that is opposite to the first part with the support portion being sandwiched between the first and second parts in order to rotate each arm about a corresponding one of a pair of rotating portions (35, 36), so that the pads sandwich a disc (11) rotatable together with a wheel of a railway vehicle to brake the railway vehicle; and
a second drive unit (70, 80, 200) configured to drive a first rotating portion (35) of the pair of rotating portions to reduce a distance between the arms, so that the pads sandwich the disc to brake the railway vehicle.

2. The brake caliper device of claim 1,
wherein the first rotating portion has a rotation lever (35A) that is rotatable about an eccentric axis to transmit a driving force from the second drive unit to the first rotating portion, and
wherein the second drive unit is configured to drive the rotation lever to rotate the first rotating portion about the eccentric axis, so that the distance between the arms is reduced.

3. The brake caliper device of claim 2, comprising:
a first restraining unit (105) configured to restrain the first driving unit from operating; and
a second restraining unit (74, 86, 205) configured to restrain the second drive unit from operating,
wherein, when the first drive unit is in operation, the second restraining unit operates to restrain the second drive unit from operating, and
wherein, when the second drive unit is in operation, the first restraining unit operates to restrain the first drive unit from operating.

4. The brake caliper device of claim 1, comprising
a control unit (60) configured to control the first and second drive units,
wherein, when one of the first and second drive units experiences an abnormality, the control unit drives the other of the first and second drive units.

5. The brake caliper device of claim 4, wherein, when driving one of the first and second drive units, the control unit suspends the other of the first and second drive units.

6. The brake caliper device of claim 4, wherein the control unit drives one of the first and second drive units until the pads touch the disc and drives the other of the first and second drive units such that the pads press the disc.

7. The brake caliper device of claim 6,
wherein the first and second drive units each have:
a speed reducer (103, 203); and
an electric motor (101) configured to drive the arms via the speed reducer, and
wherein one of the first and second drive units has a lower reduction ratio than the other of the first and second drive units.

8. The brake caliper device of claim 2 or 3,
wherein the first drive unit includes an electric motor (101) configured to drive the second parts of the arms, and
wherein the second drive unit has a pneumatic cylinder (70) configured to drive the rotation lever.
